# EUROPÄISCHE PATENTSCHRIFT

(11) **EP 1 544 205 B1**
(45) Veröffentlichungstag und Bekanntmachung des Hinweises auf die Patenterteilung: **04.06.2008**
(21) Anmeldenummer: 04028905.0
(22) Anmeldetag: 07.12.2004
(51) Int. Cl.: C07F 9/30, C08K 5/5313

(54) **Verfahren zur Herstellung von Dialkylphosphinsäuresalzen**
Process for the preparation of dialkylphosphinic acid salts
Procédé pour la préparation de sels d'acides dialkylphosphiniques

(30) Priorität: 19.12.2003 DE 10359815
(43) Veröffentlichungstag der Anmeldung: 22.06.2005
(73) Patentinhaber: Clariant Produkte (Deutschland) GmbH, 65929 Frankfurt am Main (DE)
(72) Erfinder: Bauer, Harald, Dr., 50170 Kerpen (DE); Krause, Werner, Dr., 50354 Hürth (DE); Sicken, Martin, Dr., 51149 Köln (DE); Weferling, Norbert, Dr., 50354 Hürth (DE)

(56) Entgegenhaltungen:
- EP-A- 0 699 708
- WO-A-98/13371
- WO-A-98/20012
- WO-A-99/28327

## Beschreibung

Die Erfindung betrifft ein Verfahren zur Herstellung von Dialkylphosphinsäuresalzen sowie die Verwendung der nach diesem Verfahren hergestellten Dialkylphosphinsäure-Salze.

Salze von organischen Phosphorsäuren sind als Flammschutzmittel bekannt. Sie können nach verschiedenen Verfahren hergestellt werden.

So beschreibt die EP-A-0 699 708 flammgeschützte Polyesterformmassen, wobei die Polyester durch den Zusatz von Calcium- oder Aluminiumsalzen von Phosphinoder Diphosphinsäuren flammfest ausgerüstet werden. Die vorgenannten Salze werden durch Umsetzung des entsprechenden Dialkylphosphinsäuren mit Calciumoder Aluminiumhydroxid erhalten.

Die DE 24 47 727 beschreibt schwerentflammbare Polyamidformmassen, die ein Salz einer Phosphinsäure oder einer Diphosphinsäure enthalten.

Die vorgenannten Verfahren weisen jedoch den Nachteil auf, dass die geeigneten organischen Phosphorverbindungen zunächst auf umständliche Art und Weise hergestellt werden müssen. Dies trifft insbesondere für die Dialkylphosphinsäuren zu, deren Aluminiumsalze in der Anwendung als Flammschutzmittel die besten Resultate liefern, und für die ebenfalls einige Synthesewege beschrieben sind.

So beschreibt die DE 21 00 779 A1 ein Verfahren zur Herstellung von Dialkylphosphinsäurealkylestern durch Addition von Olefinen mit 2 bis 22 Kohlenstoffatomen an die nur schwer zugänglichen Alkylphosphonigsäureester.
In der WO 99/28327 wird ein Verfahren beschrieben, das ausgehend von Alkalisalzen der hypophosphorigen Säuren in zwei Stufen zu Phosphinsäuresalzen führt.

Dieses Verfahren besitzt den Nachteil, dass organische Lösungsmittel, bevorzugt Essigsäure, Verwendung finden. Diese müssen aufwendig rezykliert werden und verbleiben als Verunreinigungen im Endprodukt, was bei der vorgesehenen Einarbeitung in Kunststoffe zu unerwünschten Nebeneffekten führt. Des weiteren führt die Verwendung von organischen Lösungsmitteln in der ersten Verfahrensstufe aufgrund der hohen Löslichkeit der umzusetzenden Olefine zu unerwünschten telomeren Nebenprodukten.

Der Erfindung liegt daher die Aufgabe zugrunde, ein Verfahren zur Herstellung von Salzen der Dialkylphosphinsäuren zur Verfügung zu stellen, bei dem sich auf besonders einfache und wirtschaftliche Art und Weise Dialkylphosphinsäuresalze von bestimmten Metallen in hoher Reinheit herstellen lassen. Der Einsatz von organischen Lösungsmitteln soll vermieden werden.

Diese Aufgabe wird gelöst durch ein Verfahren der eingangs beschriebenen Art, dadurch gekennzeichnet, dass man
a) Hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive
enthält, und wobei es sich bei den Lösungsmittelsystem-Additiven um Mineralsäuren, saure Salze, Alkalien und/oder Elektrolyte und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt.

Bevorzugt handelt es sich bei den sauren Salzen um Natriumbisulfat, Natriumbisulfit und/oder Kaliumbisulfit.

Bevorzugt handelt es sich bei dem Salz der hypophosphorigen Säure um ein Alkalisalz, insbesondere um das Natriumsalz.

Bevorzugt handelt es sich bei den Dialkylphosphinsäuresalzen der Verfahrensstufe a) um Alkalisalze, insbesondere um die Natriumsalze.

Bevorzugt stellt man die Hypophosphorige Säure in situ aus Salzen der Hypophosphorigen Säure und mindestens einer Mineralsäure her, wobei das Verhältnis von Additiv-Säure zu Hypophosphit (auf Äquivalentbasis) 0 zu 1 bis 2 zu 1 beträgt.

Bevorzugt wird die Umsetzung im Schritt a) in Gegenwart eines Radikalinitiators durchgeführt.

Bevorzugt werden als Radikalinitiatoren Peroxide bildende Verbindungen und/oder Peroxoverbindungen wie Wasserstoffperoxid, Kaliumpersulfat, Natriumpersulfat, Ammoniumpersulfat und/oder Azoverbindungen wie 2,2'-Azobis(2-amidinopropan)-dihydrochlorid und/oder 2,2'-Azobis(N,N'-dimethylenisobutyramidin)-dihydrochlorid eingesetzt.

Bevorzugt wird der Radikalinitiator in Mengen von 0,001 bis 10 mol-%, bezogen auf die phosphorhaltige Verbindung, eingesetzt.

Bevorzugt wird der Radikalinitator mit einer Geschwindigkeit von 0,01 bis 10 mol-% Initiator pro Stunde, bezogen auf die phosphorhaltige Verbindung, zudosiert. Bevorzugt werden als Olefine Ethylen, Propylen, n-Buten und/oder i-Buten oder beliebige Gemische davon eingesetzt.

Bevorzugt beträgt das Verhältnis von Olefine zu Hypophosphit und/oder hypophosphoriger Säure (auf Mol-Basis) 0 zu 1 bis 3 zu 1, bevorzugt 0,5 zu 1 bis 2,5 zu 1.

Bevorzugt erfolgt die Umsetzung im Schritt a) bei einem Druck des eingesetzten Olefins von 1 bis 100 bar, bevorzugt 2 bis 50 bar.

Bevorzugt versteht die Atmosphäre im Schritt a) bei der Umsetzung zu 50 bis 99,9 Gew.-% aus Bestandteilen des Lösungmittelsystems und Olefin, bevorzugt zu 70 bis 95 Gew.-%.

Bevorzugt enthält die Atmosphäre gasförmige Komponenten, die nicht an der Reaktion teilnehmen.

Bevorzugt handelt es sich bei den gasförmigen Komponenten um Sauerstoff, Stickstoff, Kohlendioxid, Edelgase, Wasserstoff und/oder Alkane.

Bevorzugt erfolgt die Umsetzung in der Verfahrensstufe a) bei einer Temperatur von 0 bis 250°C erfolgt, bevorzugt bei 20 bis 200°C und besonders bevorzugt bei 50 bis 150°C.

Bevorzugt erfolgt die Umsetzung in Verfahrensstufe a) in Absorptionskolonnen, Sprühtürmen, Blasensäulen, Rührkesseln und/oder Knetern.

Bevorzugt werden als Mischorgane Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen eingesetzt.

Bevorzugt erfährt die Reaktionslösung im Verfahrensstufe a) eine Mischintensität, die einer Rotations-Reynolds-Zahl von 1 bis 1000000, bevorzugt von 100 bis 100000 entspricht.

Bevorzugt erfolgt in Verfahrensstufe a) eine intensive Durchmischung von Olefin, Radikalinitiator, Lösungsmittelsystem und Hypophosphoriger Säure und/oder deren Salzen unter einem Energieeintrag von 0,083 bis 10 kW/m³, bevorzugt 0,33 - 1,65 kW/m³.

Bevorzugt wird die Umsetzung der Dialkylphosphinsäuren und/oder -salze mit Metallen und/oder Metallverbindungen nach Verfahrensstufe b) für vierwertige Metallionen oder Metalle mit stabiler vierwertiger Oxidationsstufe in einem Molverhältnis von Dialkylphosphinsäure/-salz zu Metall von 6 zu 1 bis 1 zu 0,66 durchgeführt.

Bevorzugt wird die Umsetzung der Dialkylphosphinsäuren und/oder -salzen mit Metallen und/oder Metallverbindungen nach Verfahrensstufe b) für dreiwertige Metallionen oder Metalle mit stabiler dreiwertiger Oxidationsstufe in einem Molverhältnis von Dialkylphosphinsäure/-salz zu Metall von 4,5 zu 1 bis 1 zu 0,66 durchgeführt.

Bevorzugt wird die Umsetzung der Dialkylphosphinsäuren und/oder -salzen mit Metallen und/oder Metallverbindungen nach Verfahrensstufe b) für zweiwertige Metallionen oder Metalle mit stabiler zweiwertiger Oxidationsstufe in einem Molverhältnis von Dialkylphosphinsäure/-salz zu Metall von 3 zu 1 bis 1 zu 0,66 durchgeführt.

Bevorzugt wird die Umsetzung der Dialkylphosphinsäuren und/oder -salzen mit Metallen und/oder Metallverbindungen nach Verfahrensstufe b) für einwertige Metallionen oder Metalle mit stabiler einwertiger Oxidationsstufe in einem Molverhältnis von Dialkylphosphinsäure/-salz zu Metall von 1,5 zu 1 bis 1 zu 0,66 durchgeführt.

Bevorzugt handelt es sich bei den Metallverbindungen von Mg, Ca, Al, Zn, Ti, Sn, Zr oder Fe für Verfahrenstufe b) um Metalle, Metalloxide, -hydroxide, -oxidhydroxide, -borate, -carbonate, -hydroxocarbonate, -hydroxocarbonathydrate, gemischten -hydroxocarbonate, - gemischte hydroxocarbonathydrate, -phosphate, -sulfate, -sulfat hydrate, -hydroxosulfathydrate, gemischte -hydroxosulfathydrate, oxysulfate, -acetate, -nitrate, fluorid, -fluoridhydrate, -chlorid, -chloridhydrate, -oxychloride, -bromide, -iodide, -iodid hydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Bevorzugt erfolgt die Umsetzung in Verfahrensstufe b) bei einer Temperatur von 20 bis 250°C, bevorzugt bei einer Temperatur von 80 bis 120°C.

Bevorzugt erfolgt die Umsetzung in Verfahrensstufe b) bei einem Druck zwischen 1 Pa und 200 MPa, bevorzugt 0,01 MPa bis 10 MPa.

Bevorzugt erfolgt die Umsetzung in Verfahrensstufe b) während einer Reaktionszeit der Dialkylphosphinsäuren und/oder deren Alkalisalzen mit Metallverbindungen von Mg, Ca, Al, Zn, Ti, Sn, Zr oder Fe zu den Dialkylphosphinsäuresalzen dieser Metalle von 1*10⁻⁷ bis 1*10² h.

Bevorzugt erfolgt die Umsetzung in Verfahrensstufe b) von Dialkylphosphinsäuren und/oder deren Alkalisalzen mit Metallverbindungen von Mg, Ca, Al, Zn, Ti, Sn, Zr oder Fe zu den Dialkylphosphinsäuresalzen dieser Metalle bei einem Feststoffgehalt der Dialkylphosphinsäuresalze dieser Metalle von 0,1 bis 70 Gew.-%, bevorzugt 5 bis 40 Gew.-%.

Bevorzugt erfolgt die Umsetzung in Verfahrensstufe b) in einem Rührkessel, Mischer und/oder Kneter.

Bevorzugt erfolgt die Umsetzung in Verfahrensstufe b) mit einem Energieeintrag von 0,083 bis 1,65 kW/m³, besonders bevorzugt 0,33 - 1,65 kW/m³.
Bevorzugt führt man in einer Verfahrensstufe a1) die nach der Verfahrensstufe a) erhaltenen Dialkylphosphinsäuren und/oder deren Alkalisalze in die jeweils andere Verbindungsgruppe über, um zu einem einheitlichen Produkt zu gelangen und führt dann erst die Verfahrensstufe b) durch.

Bevorzugt führt man in Verfahrenstufe a) erhaltenes Dialkylphosphinsäure-Alkalisalz in einer Verfahrensstufe a1) in die Dialkylphosphinsäure über und setzt in Verfahrensstufe b) diese mit Metallverbindungen von Mg, Ca, Al, Zn, Ti, Sn, Zr oder Fe zu den Dialkylphosphinsäuresalzen dieser Metalle um.

Bevorzugt wandelt man in Verfahrenstufe a) erhaltene Dialkylphosphinsäure in einer Verfahrensstufe a1) in ein Dialkylphosphinsäure-Alkalisalz um und setzt in Verfahrensstufe b) dieses mit Metallverbindungen von Mg, Ca, Al, Zn, Ti, Sn, Zr oder Fe zu den Dialkylphosphinsäuresalzen dieser Metalle um

Bevorzugt werden die Dialkylphosphinsäuresalze der Metalle Mg, Ca, Al, Zn, Ti, Sn, Zr oder Fe aus Verfahrensstufe b) durch Filtrieren und/oder Zentrifugieren aus dem Reaktionsgemisch abgetrennt.

Bevorzugt wird das Dialkylphosphinsäuresalz in Verfahrensstufe b) mit Druck-Filternutschen, Vakuum-Filternutschen, Rührwerksfilternutschen, Druck-Kerzenfilter, Axial-Blattfilter, Kreis-Blattfilter, Zentrifugal-Scheibenfilter, Kammer-/Rahmenfilterpressen, Automatische Kammerfilterpressen, Vakuum-Trommelzellenfilter, Vakuum-Scheibenzellenfilter, Vakuum-Innenzellenfilter, Vakuum-Planzellenfilter, Rotations-Druckfilter, Vakuum-Bandfilter abgetrennt.

Bevorzugt beträgt der Filtrationsdruck 0,5 Pa bis 6 MPa.

Bevorzugt beträgt die Filtrationstemperatur 0 bis 400°C.

Bevorzugt beträgt die spezifische Filterleistung 10 bis 200kg*h⁻¹*m⁻².

Bevorzugt beträgt die Restfeuchte des Filterkuchens 5 bis 60 %.

Bevorzugt wird das Dialkylphosphinsäuresalz in Verfahrensstufe b) mit Vollmantelzentrifugen wie Überlauf-Zentrifugen, Schäl-Zentrifugen, Kammer-Zentrifugen, Schneckenaustrags-Zentrifugen, Teller-Zentrifugen, Rohr-Zentrifugen, Siebzentrifugen wie Hänge- und Pendel-Zentrifugen, Siebschnecken-Zentrifugen, Siebschäl-Zentrifugen oder Schub-Zentrifugen abgetrennt.

Bevorzugt beträgt das Beschleunigungsverhältnis 300 bis 15000.

Bevorzugt beträgt die Suspensionsdurchsatzleistung 2 bis 400 m³*h⁻¹.

Bevorzugt beträgt die Feststoffdurchsatzleistung 5 bis 80 t*h⁻¹.

Bevorzugt beträgt die Restfeuchte des Kuchens 5 bis 60 %.

Bevorzugt wird das nach der Verfahrensstufe b) durch Filtrieren und/oder Zentrifugieren aus dem Reaktionsgemisch abgetrennte Diethylphosphinsäuresalz der Metalle Mg, Ca, Al, Zn, Ti, Sn, Zr oder Fe getrocknet.

Bevorzugt weist das Dialkylphosphinsäuresalz der Metalle Mg, Ca, Al, Zn, Ti, Sn, Zr oder Fe eine Restfeuchte von 0,01 bis 10 Gew.-%, bevorzugt von 0,1 bis 1 Gew.-%, auf.

Bevorzugt weist das Dialkylphosphinsäuresalz der Metalle Mg, Ca, Al, Zn, Ti, Sn, Zr oder Fe eine mittlere Teilchengröße von 0,1 bis 2000 µm, bevorzugt von 10 bis 500 µm, auf.

Bevorzugt weist das Dialkylphosphinsäuresalz der Metalle Mg, Ca, Al, Zn, Ti, Sn, Zr oder Fe eine Schüttdichte von 80 bis 800 g/l, bevorzugt von 200 bis 700 g/l, auf.

Offenbart wird auch ein Verfahren zur Herstellung von Dialkylphosphinsäuresalzen, dadurch gekennzeichnet, dass man
a) Hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und in
   a1) die nach a) erhaltenen Dialkylphosphinsäurederivate gegenseitig ineinander überführt.

Offenbart wird auch ein Verfahren zur Herstellung von Dialkylphosphinsäuresalzen, dadurch gekennzeichnet, dass man
a) Hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt.

Offenbart wird ebenfalls eine Lösung von Dialkylphosphinsäuren und/oder deren Alkalisalze welche
10 bis 100 Gew.-% Dialkylphosphinsäuren und/oder-deren Alkalisalzen
10 bis 100 Gew.-% Lösungsmittelsystem enthält,
wobei die Summe 100 Gew.-% beträgt.

Weiterhin offenbart wird auch Verwendung der nach dem erfindungsgemäßen Verfahren hergestellten Dialkylphosphinsäuresalze zur Herstellung von Flammschutzmitteln für thermoplastische Polymere wie Polyester, Polystyrol oder Polyamid und für Duroplaste.

Offenbart werden auch flammgeschützte Polymerformmasse, enthaltend die erfindungsgemäß hergestellten Dialkylphosphinsäuresalze der Metalle Mg, Ca, Al, Zn, Ti, Sn, Zr oder Fe.

Bevorzugt ist eine flammgeschützte Polymerformmasse, enthaltend
1 bis 50 Gew.-% erfindungsgemäß hergestellte Dialkylphosphinsäuresalze der Metalle Mg, Ca, Al, Zn, Ti, Sn, Zr oder Fe,
1 bis 99 Gew.-% Polymer oder Mischungen derselben
0 bis 60 Gew.-% Additive
0 bis 60 Gew.-% Füllstoff.

Besonders bevorzugt ist eine flammgeschützte Polymerformmasse enthaltend
5 bis 30 Gew.-% erfindungsgemäß hergestellte Dialkylphosphinsäuresalze der Metalle Mg, Ca, Al, Zn, Ti, Sn, Zr oder Fe,
5 bis 90 Gew.-% Polymer oder Mischungen derselben
5 bis 40 Gew.-% Additive
5 bis 40 Gew.-% Füllstoff.

Außerdem betrifft die Erfindung Polymer-Formkörper, -Filme, -Fäden und -Fasern, enthaltend erfindungsgemäß hergestellte Dialkylphosphinsäuresalze der Metalle Mg, Ca, Al, Zn, Ti, Sn, Zr oder Fe.

Bevorzugt sind Polymer-Formkörper, -Filme, -Fäden und -Fasern, enthaltend
1 bis 50 Gew.-% erfindungsgemäß hergestellte Dialkylphosphinsäuresalze der Metalle Mg, Ca, Al, Zn, Ti, Sn, Zr oder Fe,
1 bis 99 Gew.-% Polymer oder Mischungen derselben
0 bis 60 Gew.-% Additive
0 bis 60 Gew.-% Füllstoff.

Besonders bevorzugt sind Polymer-Formkörper, -Filme, -Fäden und -Fasern enthaltend
5 bis 30 Gew.-% erfindungsgemäß hergestellte Dialkylphosphinsäuresalze der Metalle Mg, Ca, Al, Zn, Ti, Sn, Zr oder Fe,
5 bis 90 Gew.-% Polymer oder Mischungen derselben
5 bis 40 Gew.-% Additive
5 bis 40 Gew.-% Füllstoff.

Schließlich betrifft die Erfindung auch Dialkylphosphinsäuresalze der Metalle Mg, Ca, Al, Zn, Ti, Sn, Zr oder Fe, dadurch gekennzeichnet, dass sie eine
- Restfeuchte von 0,01 bis 10 Gew.-%, bevorzugt von 0,05 bis 1 Gew.-%
- mittlere Teilchengröße von 0,1 bis 1000 µm, bevorzugt 10 bis 100µm
- Schüttdichte von 80 bis 800 g/l, bevorzugt 200 bis 700 g/l.
aufweisen.

Bevorzugt sind Dialkylphosphinsäuresalze der Metalle Mg, Ca, Al, Zn, Ti, Sn, Zr oder Fe, welche durch ein Verfahren zur Herstellung von solchen Dialkylphosphinsäuresalzen bei dem man
a) Hypophosphorige Säure und/oder deren Salze mit Olefinen in Gegenwart eines Radikalstarters zu Dialkylphosphinsäuren und/oder deren Alkalisalze in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr oder Fe zu den Dialkylphosphinsäuresalzen dieser Metalle umsetzt,
erhalten wurden.

Ebenfalls bevorzugt sind Dialkylphosphinsäuren und/oder deren Alkalisalze, welche durch Umsetzung von -Hypophosphoriger Säure und/oder deren Salze mit Olefinen in Gegenwart eines Radikalstarters zu Dialkylphosphinsäuren und/oder deren Alkalisalzen in einem Lösungsmittelsystem erhalten wurden.

Ebenfalls bevorzugt sind Dialkylphosphinsäuren und/oder deren Alkali-Salze, welche durch Umsetzung von Hypophosphoriger Säure und/oder deren Salze mit Olefinen in Gegenwart eines Radikalstarters zu Dialkylphosphinsäuren und/oder deren Alkalisalzen in einem Lösungsmittelsystem und anschließender Umwandlung der erhaltenen Dialkylphosphinsäurederivate in die jeweils andere Verbindungsgruppe überführt, um zu einem einheitlichen Produkt zu gelangen, erhalten wurden.

Ebenfalls bevorzugt sind Dialkylphosphinsäuresalze, welche erhalten wurden durch Umsetzung von
a) Hypophosphoriger Säure und/oder deren Alkali-Salze mit Olefinen in Gegenwart eines Radikalstarters zu Dialkylphosphinsäuren und/oder deren Alkalisalzen in einem Lösungsmittelsystem und dann
   a1) Überführung der nach a) erhaltenen Dialkylphosphinsäurederivate in die jeweils andere Verbindungsgruppe, um zu einem einheitlichen Produkt zu gelangen und dann
b) Umsetzung der nach a1) erhaltenen Dialkylphosphinsäurederivate mit Metallverbindungen von Mg, Ca, Al, Zn, Ti, Sn, Zr oder Fe zu den Dialkylphosphinsäuresalzen dieser Metalle.

Ebenfalls bevorzugt sind Dialkylphosphinsäuresalze, welche erhalten wurden durch Umwandlung von in Verfahrenstufe a) erhaltenem Dialkylphosphinsäurealkalisalz in die Dialkylphosphinsäure und anschließender Umsetzung dieser Dialkylphosphinsäure mit Metallverbindungen von Mg, Ca, Al, Zn, Ti, Sn, Zr oder Fe zu den Dialkylphosphinsäuresalzen dieser Metalle.

Ebenfalls bevorzugt sind Dialkylphosphinsäuresalze, welche erhalten wurden durch Umwandlung von in Verfahrenstufe a) erhaltener Dialkylphosphinsäure in Dialkylphosphinsäurealkalisalz und anschließender Umsetzung dieses Dialkylphosphinsäurealkalisalzes mit Metallverbindungen von Mg, Ca, Al, Zn, Ti, Sn, Zr oder Fe zu den Dialkylphosphinsäuresalzen dieser Metalle.

Überraschend wurde gefunden, dass in erfindungsgemäßem Lösungsmittelsystem Olefine mit überraschend guter Umsatzgeschwindigkeit umgesetzt werden können, und die Bildung telomerer Produkte, also solcher mit mehrfacher Olefinanlagerung, stark unterdrückt wird.

Bevorzugte Lösungssystem-Additive sind Mineralsäuren wie z.B. die Elementwasserstoffsäuren Säuren, Oxosäuren, Peroxosäuren und Peroxodisäuren der Elemente der siebten, sechsten, fünften, vierten und dritten Hauptgruppe des Periodensystems.

Besonders bevorzugte Mineralsäuren sind Flusssäure, Salzsäure, Perchlorsäure, Schweflige Säure, Schwefelsäure, Peroxomonoschwefelsäure (Caro'sche Säure), Peroxodischwefelsäure, Salpetrige Säure, Salpetersäure, Phosphorige Säure, Phosphorsäure, Pyrophosphorsäure, Polyphosphorsäure, Peroxomonophosphorsäure, Peroxodiphosphorsäure, Kohlensäure, Kieselsäure, Borsäure, Peroxoborsäure.

Bevorzugte Lösungssystem-Additive sind Alkalien.

Bevorzugte Lösungssystem-Additive sind Elektrolyte.

Die hypophosphorige Säure wird bevorzugt als wässrige Lösung und/oder als wasserfreie Ware eingesetzt.

Bevorzugte Kationen der Salze der Hypophosphorigen Säure sind Li, Na, K, NH4, TI, Be, Mg, Ca, Sr, Ba, Zn, Cd, Pb, Mn, Ni, Co, Fe, Cu, Al, Cr, Ce, Uranyl, Sc, Zr, Hf, Th, Ta und Ti.

Bevorzugt wird die freie Hypophosphorige Säure in situ aus Alkalihypophosphit und Säure gebildet. Erfindungsgemäß beträgt das Verhältnis von Säure zu Hypophosphit (auf Säure-Äquivalentbasis) 0 zu 1 bis 2 zu 1.

Äquivalent ist dabei der Bruch von Molzahl Säure dividiert durch Anzahl acider Protonen.

Bevorzugt tragen die Olefine eine funktionelle Gruppe.

Bevorzugte funktionelle Gruppen sind Sulfonsäure-, Aldehyd-, Carbonsäure-, Carbonyl, Hydroxyl-, Thionyl-, Amino-, Monoalkylamino-, Dialkylamino-, Amino-, Amido-, Nitro-Gruppierungen.

Besonders bevorzugt wird als Olefin Ethylen eingesetzt.

Grundsätzlich sind als Radikalinitiatoren alle Systeme geeignet, die freie Radikale generieren. Die Addition des Olefins kann durch einen anionischen Initiator, radikalischen Initiator oder photochemisch initiiert werden.

Besonders bevorzugte Radikalinitiatoren sind Peroxoverbindungen wie Peroxomonoschwefelsäure, Kaliumpersulfat (Kaliumperoxomonosulfat), Caroat(TM), Oxone(TM), Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Besonders bevorzugt sind Verbindungen, die im Lösemittelsystem Peroxide bilden können wie Natriumperoxid, Natriumperoxiddiperoxohydrat, Natriumperoxiddiperoxohydrathydrat, Natriumperoxidedihydrat, Natriumperoxidoctahydrat, Lithiumperoxid, Lithiumperoxidmonoperoxohydrattrihydrat, Calciumperoxid , Strontiumperoxid, Bariumperoxid, Magnesiumperoxid, Zinkperoxid, Kaliumhyperoxid, Kaliumperoxiddiperoxohydrat, Natriumperoxoboratetetrahydrat, Natriumperoxoborattrihydrat, Natriumperoxoboratmonohydrat, Wasserfreies Natriumperoxoborat, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatediperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Besonders bevorzugt sind Wasserstoffperoxid, Perameisensäure, Peressigsäure, Benzoylperoxid, Di-t-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxymaleinsäure, t-Butylperoxybenzoat, Acetylcyclohexylsulfonylperoxid.

Bevorzugt werden als Radikalstarter wasserlösliche Azoverbindungen eingesetzt.

Weiterhin bevorzugt sind Azoinitiatoren wie 2-t-Butylazo-2-cyanopropan, Dimethylazodiisobutyrat, Azodiisobutyronitril, 2-t-Butylazo-1-cyanocyclohexan, 1-t-Amylazo-1-cyanocyclohexan. Weiterhin sind bevorzugt Alkylperketale wie 2,2-Bis-(t-butylper-oxy)butan, Ethyl-3,3-bis(t-butylperoxy)butyrat, 1,1-Di-(t-butylperoxy)-cyclohexan.

Besonders bevorzugt sind Azoinitiatoren wie VAZO 52, VAZO 64 (AIBN), VAZO 67, VAZO 88, VAZO 44, VAZO 56, VAZO 68 der Fa. Dupont-Biesteritz, V-70 2,2'-Azobis(4-methoxy-2,4-dimethyl valeronitril),V-65 2,2'-Azobis(2,4-dimethylvaleronitril)V-601 Dimethyl 2,2'-azobis(2-methylpropionat),V-59 2,2'-Azobis(2-methylbutyronitril),V-40, VF-096 1,1'-Azobis(cyclohexane-1-carbonitril),V-30 1-[(cyano-1-methylethyl)azo]formamid,VAm-110 2,2'-Azobis(N-butyl-2-methylpropionamid),VAm-111 2,2'-Azobis(N-cyclohexyl-2-methylpropionamid) VA-041 2,2'-Azobis[2-(5-methyl-2-imidazolin-2-yl)propan]dihydrochlorid, VA-044 2,2'-Azobis[2-(2-imidazolin-2-yl)propan] dihydrochlorid,VA-046B 2,2'-Azobis[2-(2-imidazolin-2-yl)propandisulfatedihydrate, V-50 2,2' - azobis(2-amidinopropan) hydrochlorid,VA-057 2,2'-Azobis[N-(2-carboxyethyl)-2-methylpropionamidin]-tetrahydrat,VA-058 2,2'-Azobis[2-(3,4,5,6-tetrahydropyrimidin-2-yl)propan] dihydrochlorid,VA-060 2,2'-Azobis{2-[1-(2-hydroxyethyl)-2-imidazolin-2-yl]propan}dihydrochlorid,VA-061 2,2'-Azobis[2-(2-imidazolin-2-yl)propan],VA-080 2,2'-Azobis{2-methyl-N-[1,1-bis(hydroxymethyl)-2-hydroxyethyl] propionamid,VA-085 2,2'-Azobis{2-methy)-N-[2-(1-hydroxybuthy!)]propionamid}, VA-086 2,2'-Azobis[2-methyl-N-(2-hydroxyethyl)propionamid]von Wako Chemicals.

Bei den Aluminiumverbindungen ist metallisches Aluminium und Aluminiumsalze mit Anionen der siebten Hauptgruppe wie z.B. Aluminiumfluorid, Aluminiumfluoridtrihydrat, Aluminiumchlorid (wasserfrei, kristallisiert; wasserfrei, sublimiert), Aluminiumchlorid hexahydrat, Aluminiumhydroxychlorid, ALCHLOR®-AC von Hardman Australien, basische Aluminiumchloridlösung, Aluminiumchloridlösung, sulfatkonditionierte Polyaluminiumchloridlösung (PACS) von Lurgi Lifescience, OBRAFLOC 18® von Oker Chemie GmbH, Alkaflock®, Ekocid® 60-Typen, Sachtoklar®-Typen, Ekofloc®-Typen, Ekozet-Typen von Sachtleben, Locron®-, Parimal®-Typen von Clariant, wasserfreies Aluminiumbromid, Aluminiumiodid, Aluminiumiodid hexahydrat. bevorzugt.

Bevorzugt sind Aluminiumsalze mit Anionen der sechsten Hauptgruppe wie z.B. Aluminiumsulfid, Aluminiumselenid.

Bevorzugt sind Aluminiumsalze mit Anionen der fünften Hauptgruppe wie z.B. Aluminiumphosphid, Aluminiumhypophosphit, Aluminiumantimonid, Aluminiumnitrid sowie Aluminiumsalze mit Anionen der vierten Hauptgruppe wie z.B. Aluminiumcarbid, Aluminiumhexafluorosilicat; ebenso Aluminiumsalze mit Anionen der ersten Hauptgruppe wie z.B. Aluminiumhydrid, Aluminium-Calcium-Hydrid, Aluminiumborhydrid oder auch Aluminiumsalze der Oxosäuren der siebten Hauptgruppe wie z.B. Aluminiumchlorat.

Bevorzugt sind Aluminiumsalze der Oxosäuren der sechsten Hauptgruppe wie z.B. Aluminiumsulfat, Aluminiumsulfat hydrat, Aluminiumsulfat hexahydrat, Aluminiumsulfat hexadekahydrat, Aluminiumsulfat octadekahydrat, Aluminiumsulfat-Lösung von Ekachemicals, Aluminiumsulfat-flüssig von Oker Chemie GmbH, Natrium-Aluminiumsulfat, Natrium-Aluminiumsulfatdodekahydrat, Aluminium-Kaliumsulfat, Aluminium-Kaliumsulfatdodecahydrat, Aluminiumammoniumsulfat, Aluminiumammoniumsulfatdodecahydrat, Magaldrat (Al₅Mg₁₀(OH)₃₁(SO₄ )₂ x nH₂O).

Bevorzugt sind auch Aluminiumsalze der Oxosäuren der fünften Hauptgruppe wie z.B. Aluminiumnitratnonahydrat, Aluminiummetaphosphat, Aluminiumphosphat, leichtes Aluminiumphosphathydrat, monobasisches Aluminiumphosphat, monobasische Aluminiumphosphat-Lösung; ebenso Aluminiumsalze der Oxosäuren der vierten Hauptgruppe wie z.B. Aluminiumsilicat, Aluminium-Magnesiumsilicat, Aluminiummagnesiumsilicathydrat (Almasilat), Aluminiumcarbonat, Hydrotalcit (Mg₆Al₂(OH)₁₆CO3 * nH₂O), Dihydroxyaluminiumnatriumcarbonat, NaAl(OH)₂CO₃ und Aluminiumsalze der Oxosäuren der dritten Hauptgruppe wie z.B. Aluminiumborat oder auch Aluminiumsalze der Pseudohalogenide wie z.B. Aluminiumthiocyanat.

Bevorzugt sind Aluminiumoxid (purum, purissum, technisch, basisch, neutral, sauer), Aluminiumoxidhydrat, Aluminiumhydroxid oder gemischtes Aluminiumoxidhydroxid und/oder Polyaluminiumhydroxy-Verbindungen, die vorzugsweise einen Aluminiumgehalt von 9 bis 40 Gew.-% besitzen.

Bevorzugte Aluminiumsalze sind solche mit organischen Anionen z.B. Aluminiumsalze von Mono-, Di-, Oligo-, Polycarbonsäuren wie z.B. Aluminiumdiacetat, Aluminiumacetat basisch, Aluminiumsubacetat, Aluminiumacetotartrat, Aluminiumformiat, Aluminiumlactat, Aluminiumoxalat, Aluminiumtartrat, Aluminiumoleat, Aluminiumpalmitat, Aluminiummonosterarat, Aluminiumstearat, Aluminium trifluoromethansulfonat, Aluminiumbenzoat, Aluminiumsalicylat, Aluminiumhexahamstoffsulfattriiodid, Aluminium-8-oxychinolat.

Bei den Zink-Verbindungen ist elementares, metallisches Zink sowie Zinksalze mit anorganischen Anionen wie z.B. Zinkhalogenide (Zinkfluorid, Zinkfluorid tetrahydrat, Zinkchloride (Zinkbutter), Bromide Zinkiodid) bevorzugt.

Bevorzugt sind Zinksalze der Oxosäuren der dritten Hauptgruppe (Zinkborat, z.B. Firebrake ZB, Firebrake 415, Firebrake 500) sowie Zinksalze der Oxosäuren der vierten Hauptgruppe (basisches) Zinkcarbonat, Zinkhydroxidcarbonat, wasserfreies Zinkcarbonat, basisches Zinkcarbonathydrat, (basisches) Zinksilicat, Zinkhexafluorosilicat, Zinkhexafluorosilicat hexahydrat, Zinkstannat, Zinkhydroxidstannat, Zink-Magnesium-Aluminium-Hydroxid-Carbonat) und Zinksalze der Oxosäuren der fünften Hauptgruppe (Zinknitrat, Zinknitrathexahydrat, Zinknitrit, Zinkphosphat, Zinkpyrophosphat); ebenso Zinksalze der Oxosäuren der sechsten Hauptgruppe (Zinksulfat, Zinksulfatmonohydrat, Zinksulfatheptahydrat) und Zinksalze der Oxosäuren der siebten Hauptgruppe (Hypohalogenite, Halogenite, Halogenate, z.B. Zinkiodat, Perhalogenate, z.B. Zinkperchlorat).

Bevorzugt sind Zinksalze der Pseudohalogenide (Zinkthiocyanat, Zinkcyanat, Zinkcyanid)

Bevorzugt sind Zinkoxide, Zinkperoxide (z.B. Zinkperoxid), Zinkhydroxide oder gemischte Zinkoxidhydroxide (Standard-Zinkoxid, z.B. von Grillo, aktiviertes Zinkoxid z.B. von Rheinchemie, Zincit, Calamin).

Bevorzugt sind Zinksalze der Oxosäuren der Übergangsmetalle (Zinkchromat(VI)hydroxyd (Zinkgelb), Zinkchromit, Zinkmolybdat, z.B. ™Kemgard 911 B, Zinkpermanganat, Zinkmolybdat-Magnesiumsilicat, z.B. ™Kemgard 911 C)

Bevorzugte Zinksalze sind solche mit organischen Anionen, hierzu gehören Zinksalze von Mono-, Di-, Oligo-, Polycarbonsäuren, Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat, der Oxalsäure (Zinkoxalat ), der Weinsäure (Zinktartrat), Citronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionaen (Zinkphenolat etc), Zink-para-Phenolsulfonat, Zink-para-Phenolsulfonathydrat, Zinkacetylacetonat hydrat, Zinktannat, Zinkdimethyldithiocarbamat, Zinktrifluormethansulfonat.

Bevorzugt sind Zinkphosphid, Zinkselenid, Zinktellurid.

Bei den Titan-Verbindungen ist metallisches Titan ebenso wie Titansalze mit anorganischen Anionen wie z.B. Chlorid-, Nitrat- oder Sulfat-lonen sowie organischen Anionen wie z.B. Formiat- oder Acetat-lonen. Besonders bevorzugt sind Titandichlorid, Titansesquisulfat, Titan(IV)bromid, Titan(IV)fluorid, Titan(III)chlorid, Titan(IV)chlorid, Titan(IV)chlorid-Tetrahydrofuran-Komplex, Titan(IV)oxychlorid, Titan(IV)oxychlorid-Salzsäure-Lösung, Titan(IV)oxysulfat, Titan(IV)oxysulfat-Schwefel-säure-Lösung oder auch Titanoxide. Bevorzugte Titan-Alkoxide sind Titan-(IV)-n-propoxid (®Tilcom NPT, ®Vertec NPT), Titan-(IV)-n-butoxid, Titanchloridtriisopropoxid, Titan-(IV)-ethoxid, Titan-(IV)-2-ethylhexyloxid (®Tilcom EHT, ®Vertetec EHT)

Bei den Zinn-Verbindungen ist metallisches Zinn sowie Zinnsalze (Zinn(II)chlorid, Zinn(II)chlorid dihydrat, Zinn(IV)chlorid) bevorzugt, ebenso Zinnoxide sowie als bevorzugtes Zinn-Alkoxid Zinn-(IV)-tert-butoxid.

Bei den Zirkonium-Verbindungen ist metallisches Zirkonium sowie Zirkoniumsalze wie Zirkonium(IV)chlorid, Zirkoniumsulfat, Zirkoniumsulfattetrahydrat, Zirconylacetat, Zirconylchlorid, Zirconylchloridoctahydrat bevorzugt. Weiterhin bevorzugt sind Zirkonoxide sowie als bevorzugtes Zirkonium-Alkoxid Zirkon-(IV)-tert-butoxid.

Bevorzugt wird das nach Verfahrensstufe a) erhaltene Produktgemisch ohne weitere Reinigung in Verfahrensstufe b) mit den Metallverbindungen umgesetzt.

Bevorzugt ist die Umsetzung in Verfahrensstufe b) im durch Stufe a) gegebenen Lösungsmittelsystem.

Bevorzugt ist die Umsetzung in Verfahrensstufe b) in einem modifizierten gegebenen Lösungsmittelsystem. Bevorzugt wird das Lösungsmittelsystem modifiziert durch Zugabe von aciden Komponenten, Lösevermittlern, Schauminhibitoren etc.

In einer weiteren Ausführungsform des Verfahrens wird das nach Verfahrensstufe a) erhaltene Produktgemisch aufgearbeitet.

In einer weiteren Ausführungsform des Verfahrens wird das nach Verfahrensstufe a) erhaltene Produktgemisch aufgearbeitet und danach die nach Verfahrensstufe a) erhaltenen Dialkylphosphinsäuren und/oder deren Alkalisalze in Verfahrensstufe b) mit den Metallverbindungen umgesetzt.

Bevorzugt wird das Produktgemisch aufgearbeitet, indem die Dialkylphosphinsäuren und/oder deren Alkalisalze isoliert werden.

Bevorzugt erfolgt der Isolierschritt durch Entfernen des Lösungsmittelsystems, z.B. durch Eindampfen.

Bevorzugt erfolgt der Isolierschritt durch Entfernen des Lösungsmittelsystems und der darin gelösten Nebenkomponenten, z.B. durch Fest/Flüssig-Trennverfahren.

Bevorzugt wird das Produktgemisch aufgearbeitet, indem unlösliche Nebenprodukte abgetrennt werden z.B. durch Fest/Flüssig-Trennverfahren.

Der Gegenstand der vorliegenden Erfindung umfasst insbesondere auch ein Verfahren, bei dem man Natriumhypophosphit mit Ethylen in Gegenwart von Natriumperoxodisulfat in Wasser zum Natriumsalz der Diethylphosphinsäure als Hauptprodukt umsetzt, dieses Produkt anschließend mit Schwefelsäure in die Diethylphosphinsäure überführt und mit Aluminiumhydroxid zum Aluminiumsalz der Diethylphosphinsäure umsetzt.

Erfindungsgemäß wird ein in Verfahrenstufe a) erhaltenes Dialkylphosphinsäuresalz in die Dialkylphosphinsäure umwandelt und diese mit Metallverbindungen von Mg, Ca, Al, Zn, Ti, Sn, Zr oder Fe zu den Dialkylphosphinsäuresalzen dieser Metalle umsetzt.

Erfindungsgemäß wird eine in Verfahrenstufe a) erhaltenes Dialkylphosphinsäure in ein Dialkylphosphinsäuresalz umwandelt und dieses mit Metallverbindungen von Mg, Ca, Al, Zn, Ti, Sn, Zr oder Fe zu den Dialkylphosphinsäuresalzen dieser Metalle umsetzt.

Erfindungsgemäß wird das Dialkylphosphinsäuresalz durch erfindungsgemäße Fest/Flüssig-Trennverfahren aus dem Reaktionsgemisch der Stufe b) abgetrennt. Erfindungsgemäße Fest/Flüssig-Trennverfahren sind Sedimentieren, Hydrozyklonieren, Filtrieren und/oder Zentrifugieren.

Die erfindungsgemäßen Dialkylphosphinsäuresalze von Mg, Ca, Al, Zn, Ti, Sn, Zr oder Fe werden getrocknet.

Aggregate für die Trocknung sind Kammertrockner, Kanaltrockner, Bandtrockner (Luftgeschwindigkeit 2 - 3 m/s), Tellertrockner (Temperatur 20 bis 400°C), Trommeltrockner (100 - 250°C Heißgas-Temperatur), Schaufeltrockner (50 - 300°C Temperatur), Stromtrockner (10 - 60 m/s Luftgeschwindigkeit, 50 - 300°C Abluft-Temperatur), Fließbetttrockner (0,2 - 0,5 m/s Luftgeschwindigkeit, 50 - 300°C Abluft-Temperatur, Walzentrockner, Röhrentrockner 20 bis 200°C Temperatur, Schaufeltrockner, Vakuumtrockenschränke (20 bis 300°C Temperatur, 0,001 - 0,016 MPa Druck), Vakuumwalzentrockner (20 bis 300°C Temperatur, 0,004 - 0,014 MPa Druck, Vakuumschaufeltrockner (20 bis 300°C Temperatur, 0,003 - 0,02 MPa Druck), Vakuumkonustrockner (20 bis 300°C Temperatur, 0,003 - 0,02 MPa Druck).

Die erfindungsgemäßen getrockneten Dialkylphosphinsäuresalze haben eine Restfeuchte von 0,01 bis 10 Gew.-%, bevorzugt von 0,1 bis 1 Gew.-%.

Bevorzugt ist die Teilchengröße des erfindungsgemäßen Dialkylphosphinsäuresalze 0,1 bis 1000 µm, besonders bevorzugt 10 bis 100µm.

Die bevorzugte Schüttdichte der erfindungsgemäßen Dialkylphosphinsäuresalze beträgt 80 bis 800 g/l, besonders bevorzugt 200 bis 700 g/l.

Die Offenbarung betrifft auch die Verwendung der nach dem erfindungsgemäßen Verfahren hergestellten Dialkylphosphinsäuresalze der Metalle zur Herstellung von Flammschutzmitteln.

Insbesondere betrifft die Offenbarung die Verwendung der erfindungsgemäß hergestellten Dialkylphosphinsäuresalze von Mg, Ca, Al, Zn, Ti, Sn, Zr oder Fe zur Herstellung von Flammschutzmitteln für thermoplastische Polymere wie Polyester, Polystyrol oder Polyamid und für duroplastische Polymere.
Geeignete Polyester leiten sich von Dicarbonsäuren und Dialkoholen und/oder von Hydroxycarbonsäuren oder den entsprechenden Lactonen ab, wie Polyethylenterephthalat, Polybutylenterephthalat (Celanex 2500, Celanex 2002, Fa Celanese; Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Geeignete Polystyrole sind Polystyrol, Poly-(p-methylstyrol) und/oder Poly-(alphamethylstyrol).

Bevorzugt handelt es sich bei den geeigneten Polystyrolen um Copolymere von Styrol oder alpha-Methylstyrol mit Dienen oder Acrylderivaten, wie z.B. StyrolButadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Blockcopolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeigneten Polystyrolen um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Geeignete Polyamide und Copolyamide leiten sich von Diaminen und Dicarbonsäuren und/oder von Aminocarbonsäuren oder den entsprechenden Lactamen ab, wie Polyamid 4, Polyamid 6 (Akulon K122, DSM; Zytel 7301, Fa. DuPont; Durethan B 29, Fa. Bayer), Polyamid 6/6 (Zytel 101, Fa. DuPont; Durethan A30, Durethan AKV, Durethan AM, Fa. Bayer; Ultramid A3, Fa BASF) 6/10, 6/9, 6/12, 4/6, 12/12, Polyamid 11, Polyamid 12 (Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylen-terephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die Offenbarten Dialkylphosphinsäuresalze werden bevorzugt in Compounds angewendet, die weiter zur Erzeugung von Polymer-Formkörpern verwendet werden. Bevorzugtes Verfahren zur Herstellung von Polymer-Formkörpern ist das Spritzgießen.

Die Erfindung wird durch die nachstehenden Beispiele näher erläutert.

### Beispiel 1: Diethylphosphinsäure-Aluminiumsalz

1500 g (14 Mol) Natriumhypophosphit-Monohydrat und 35 g konzentrierte Schwefelsäure wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 80 g (5 Mol-%) Wasserstoffperoxid (33 Gew.-%) in 300 g Wasser gleichmäßig zudosiert. Nach einer Nachreaktionszeit von 1 h, Entspannung des Reaktors und Abkühlung auf ca. 90°C wurde innerhalb von 60 min 746 g (4,67 Mol Aluminium) Aluminiumacetat in 2254 g Wasser zugefügt. Anschließend wurde der erhaltene Feststoff abfiltriert, mit 2 I heißem Wasser gewaschen und bei 130°C im Vakuum getrocknet. Ausbeute: 1721 g (93,5 % der Theorie).

| | | |
|---|---|---|
| ³¹P-NMR | Diethylphosphinsäure-Al-Salz | 97 Mol-% |
| | Butylethylphosphinsäure-Al-Salz | 2,5 Mol-% |
| | Ethylphosphonsäure-Al-Salz | 0,5 Mol-% |

### Beispiel 2: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 17 g (0,5 Mol-%) Natriumperoxodisulfat in 300 g Wasser gleichmäßig zudosiert. Nach einer Nachreaktionszeit von 1 h, Entspannung des Reaktors und Abkühlung auf ca. 90°C wurde innerhalb von 60 min 3000 g (4,67 Mol Aluminium) einer 46 %igen wässrigen Lösung von Al₂(SO₄)₃·14 H₂O zugefügt. Anschließend wurde der erhaltene Feststoff abfiltriert, mit 2 I heißem Wasser gewaschen und bei 130°C im Vakuum getrocknet. Ausbeute: 1730 g (95 % der Theorie).

| | | |
|---|---|---|
| ³¹P-NMR | Diethylphosphinsäure-Al-Salz | 98,6 Mol-% |
| | Butylethylphosphinsäure-Al-Salz | 0,9 Mol-% |
| | Ethylphosphonsäure-Al-Salz | 0,5 Mol-% |

### Beispiel 3: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 20 bar eingestelltes Reduzierventil Ethylen bis zur Sättigung in den Reaktor eingeleitet. Über einen Zeitraum von 6 h wurde unter ständigem Rühren bei einem Ethylendruck von 20 bar und einer Temperatur von 100-110°C eine Lösung von 32 g (1 Mol-%) Ammoniumperoxodisulfat in 300 g Wasser gleichmäßig zudosiert. Nach einer Nachreaktionszeit von 1 h, Entspannung des Reaktors und Abkühlung auf ca. 90°C wurde innerhalb von 60 min 3000 g (4,67 Mol Aluminium) einer 46%-igen wässrigen Lösung von Al₂(SO₄)₃·14 H₂O zugefügt. Anschließend wurde der erhaltene Feststoff abfiltriert, mit 2 I heißem Wasser gewaschen und bei 130°C im Vakuum getrocknet. Ausbeute: 1750 g (95,1 % der Theorie).

| | | |
|---|---|---|
| ³¹P-NMR | Diethylphosphinsäure-Al-Salz | 93,9 Mol-% |
| | Butylethylphosphinsäure-Al-Salz | 5,5 Mol-% |
| | Ethylphosphonsäure-Al-Salz | 0,6 Mol-% |

### Beispiel 4: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 19 g (0,5 Mol-%) 2,2'-Azobis(2-amidinopropan)hydrochlorid (Wako Pure Chemical Industries, Ltd., Typ V50 98,8 %),in 300 g Wasser gleichmäßig zudosiert. Nach einer Nachreaktionszeit von 1 h, Entspannung des Reaktors und Abkühlung auf ca. 90°C wurde innerhalb von 60 min 650 g (4,67 Mol Aluminium) Aluminiumchlorid hexahydrat in 2350 g Wasser zugefügt. Anschließend wurde der erhaltene Feststoff abfiltriert, mit 2 I heißem Wasser gewaschen und bei 130°C im Vakuum getrocknet.
Ausbeute: 1740 g (94,5 % der Theorie).

| | | |
|---|---|---|
| ³¹P-NMR | Diethylphosphinsäure-Al-Salz | 97,7 Mol-% |
| | Butylethylphosphinsäure-Al-Salz | 1,6 Mol-% |
| | Ethylphosphonsäure-Al-Salz | 0,7 Mol-% |

### Beispiel 5: Diethylphosphinsäure-Aluminiumsalz

1500 g (14 Mol) Natriumhypophosphit-Monohydrat und 14 g konzentrierte Schwefelsäure wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 22 g (1 Mol-%) Natriumpercarbonat in 300 g Wasser gleichmäßig zudosiert. Nach einer Nachreaktionszeit von 1 h, Entspannung des Reaktors und Abkühlung auf ca. 90°C wurde innerhalb von 60 min 3000 g (4,67 Mol Aluminium) einer 46 %igen wässrigen Lösung von Al₂(SO₄)₃·14 H₂O zugefügt. Anschließend wurde der erhaltene Feststoff abfiltriert, mit 2 I heißem Wasser gewaschen und bei 130°C im Vakuum getrocknet.
Ausbeute: 1706 g (92,7 % der Theorie).

| | | |
|---|---|---|
| ³¹P-NMR | Diethylphosphinsäure-Al-Salz | 98,7 Mol-% |
| | Butylethylphosphinsäure-Al-Salz | 0,8 Mol-% |
| | Ethylphosphonsäure-Al-Salz | 0,5 Mol-% |

### Beispiel 6: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 22 g (1 Mol-%) Natriumpercarbonat und 16 g Tetraacetylethylendiamin in 300 g Wasser gleichmäßig zudosiert. Nach einer Nachreaktionszeit von 1 h, Entspannung des Reaktors und Abkühlung auf ca. 90°C wurde innerhalb von 60 min 3000 g (4,67 Mol Aluminium) einer 46 %igen wässrigen Lösung von Al₂(SO₄)₃·14 H₂O zugefügt. Anschließend wurde der erhaltene Feststoff abfiltriert, mit 2 I heißem Wasser gewaschen und bei 130°C im Vakuum getrocknet. Ausbeute: 1720 g (93,4 % der Theorie).

| | | |
|---|---|---|
| ³¹P-NMR | Diethylphosphinsäure-Al-Salz | 97,6 Mol-% |
| | Butylethylphosphinsäure-Al-Salz | 1,8 Mol-% |
| | Ethylphosphonsäure-Al-Salz | 0,6 Mol-% |

### Beispiel 7: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 49 g (1 Mol-%) Dibenzoylperoxid (70 Gew.-% in Wasser) in 300 g Wasser gleichmäßig zudosiert. Nach einer Nachreaktionszeit von 1 h, Entspannung des Reaktors und Abkühlung auf ca. 90°C wurde innerhalb von 60 min 1725 g (4,67 Mol Aluminium) Aluminiumnitratnonahydrat gelöst in 1275 g Wasser zugefügt. Anschließend wurde der erhaltene Feststoff abfiltriert, mit 2 I heißem Wasser gewaschen und bei 130°C im Vakuum getrocknet. Ausbeute: 1697 g (92,2 % der Theorie).

| | | |
|---|---|---|
| ³¹P-NMR | Diethylphosphinsäure-Al-Salz | 96,5 Mol-% |
| | Butylethylphosphinsäure-Al-Salz: | 2,7 Mol-% |
| | Ethylphosphonsäure-Al-Salz: | 0,8 Mol-% |

### Beispiel 8: Diethylphosphinsäure-Aluminiumsalz

1,5 kg (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 33 g (1 Mol-%) Natriumperoxodisulfat in 300 g Wasser gleichmäßig zudosiert. Nach einer Nachreaktionszeit von 1 h, Entspannung des Reaktors und Abkühlung auf ca. 90°C wurden innerhalb von 30 min 700 g konzentrierte Schwefelsäure zudosiert. Anschließend wurden 364 g (4,67 Mol) Aluminiumhydroxid zugefügt und im geschlossenen Reaktor 8 h auf 150°C erhitzt. Nach Abkühlung auf Umgebungstemperatur wurde der erhaltene Feststoff abfiltriert, mit 2 I heißem Wasser gewaschen und bei 130°C im Vakuum getrocknet. Ausbeute: 1675 g (92 % der Theorie).

| | | |
|---|---|---|
| ³¹P-NMR | Diethylphosphinsäure-Al-Salz | 98,7 Mol-% |
| | Butylethylphosphinsäure-Al-Salz | 0,8 Mol-% |
| | Ethylphosphonsäure-Al-Salz | 0,5 Mol-% |

### Beispiel 9 : (Vergleich) Diethylphosphinsäure-Aluminiumsalz

2,2 kg (20,7 Mol) Natriumhypophosphit-1-hydrat wurden in 8 kg (7,62 I) Essigsäure gelöst und in einem 16-I-Doppelmantel-Druckreaktor aus Stahl-Emaille vorgelegt. Nach Aufheizen der Reaktionsmischung auf 85°C wurde über ein auf 5 bar eingestelltes Reduzierventil Ethylen bis zur Sättigung in den Reaktor eingeleitet. Die Reaktion wurde unter ständigem Rühren durch Zudosieren einer Lösung von 56 g (1 Mol-%) 2,2'-Azobis(2-amidinopropan)dihydrochlorid in 250 ml Wasser gestartet und über die Radikalstarter-Dosier-Geschwindigkeit so gesteuert, dass die Reaktionstemperatur im Reaktor bei einer Manteltemperatur von 80°C unter ständiger Zufuhr von Ethylen bei einem mittleren Druck von etwa 5 bar nicht über 95°C stieg. Die Dosierzeit betrug insgesamt 3 Stunden. Danach ließ man noch 3 h bei 85°C nachreagieren. Der Reaktor wurde entspannt und auf Raumtemperatur abgekühlt. Die Gesamt-Auswaage betrug 11,7 kg. Dies entspricht einer Ethylen-Aufnahme von 1,2 kg (100 % der Theorie).

800 g der erhaltenen Mischung aus hauptsächlich Diethylphosphinsäure-Na-Salz wurden in 2500 ml Essigsäure gelöst und anschließend 38 g (0,48 Mol) Aluminiumhydroxid zugegeben. Dann wurde für etwa 4 Stunden unter Rückfluss erhitzt, abgekühlt und abfiltriert. Der erhaltene Feststoff wurde zuerst mit 1 Liter Eisessig, dann mit 1 Liter dest. Wasser und zuletzt mit 500 ml Aceton gewaschen, und dann bei 130°C im Vakuum getrocknet. Ausbeute: 183 g (92 % der Theorie).

| | | |
|---|---|---|
| NMR-Analyse | Diethylphosphinsäure-Al-Salz | 87,2 Mol-% |
| | Ethylbutylphosphinsäure-Al-Salz | 11,9 Mol-% |
| | Ethylphosphonsäure-Al-Salz | 0,9 Mol-% |

### Beispiel 10 (Vergleich): Diethylphosphinsäure-Aluminiumsalz

Ein Gemisch von 2,64 kg (20 Mol) einer 50 %igen wässrigen Lösung von hypophosphorigen Säure und 7 kg Essigsäure wurde in einem 16-L-Doppelmantel Druckreaktor aus Stahl-Emaille vorgelegt. Nach Aufheizen der Reaktionsmischung auf 100°C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105°C eine Lösung von 56 g 2,2'-Azobis(N,N'-dimethylenisobutyramidin)-dihydrochlorid in 500 g Essigsäure gleichmäßig zudosiert. Nach einer Nachreaktionszeit von 1 h, Entspannung des Reaktors und Abkühlung auf Raumtemperatur wurde die erhaltene Lösung wurde am Rotationsverdampfer weitestgehend vom Lösungsmittel Essigsäure befreit und anschließend mit 10 I Wasser versetzt. Innerhalb von einer Stunde wurden 4500 g (3,5 Mol) einer 46 %igen wässrigen Lösung von Al₂(SO₄)₃·14 H₂O zugefügt. Anschließend wurde der erhaltene Feststoff abfiltriert, nacheinander 2 mal mit je 2 I Wasser gewaschen und bei 130°C im Vakuum getrocknet.
Ausbeute: 2520 g (82 % der Theorie).

| | | |
|---|---|---|
| NMR | Diethylphosphinsäure:-Al-Salz | 90,8 Mol-% |
| | Butylethylphosphinsäure-Al-Salz | 8,4 Mol-% |
| | Ethylphosphonsäure-Al-Salz | 0,8 Mol-% |

### Beispiel 11 :

Die nach den Beispielen 1 und 2 und den Vergleichsbeispielen 3 und 4 hergestellten Produkte wurden im Masseverhältnis 1:4 mit Polybutylenterephthalat (PBT-GV; Typ ®Celanex 2300 GV1/30; Fa. Celanese, USA) vermischt und auf einem Doppelschneckenextruder (Typ Leistritz LSM 30/34) bei Temperaturen von 230-260°C eingearbeitet. Der homogenisierte Polymerstrang wurde abgezogen, im Wasserbad gekühlt und anschließend granuliert.
Zur Beurteilung des eingetretenen Polymerabbaus wurde die Lösungsviskosität (SV-Zahl) der erhaltenen Polyester-Granulate im Vergleich zum reinen Polyester ermittelt. Folgende Ergebnisse wurden erhalten:

| enthaltener Zusatz | Reinheit* [%] | Viskositätszahl |
|---|---|---|
| Produkt nach Beispiel 2 | 98,6 | 1023 |
| Produkt nach Beispiel 8 | 98,7 | 1034 |
| Produkt nach Beispiel 9 (Vergleich) | 87,2 | 719 |
| Produkt nach Beispiel 10 (Vergleich) | 90,8 | 758 |
| kein Zusatz | - | 1072 |

| | | |
|---|---|---|
| *bezogen auf die Hauptkomponente | | |

Die Tabelle verdeutlicht die Vorteile der erfindungsgemäß hergestellten Produkte. Die einheitlichen und acetatfreien erfindungsgemäßen Phosphinsäuresalze ergeben nach Einarbeitung in die Polymermatrix nur leicht reduzierte Lösungsviskositäten, was auf eine nahezu unveränderte Molekülmasse schließen lässt. Dahingegen zeigt sich bei den gemäß der PCT/EP 98/07350 hergestellten Produkten ein deutlicher Polymerabbau (stark erniedrigte Viskositätszahlen).

## Patentansprüche

1. Verfahren zur Herstellung von Dialkylphosphinsäuresalzen, **dadurch gekennzeichnet, dass** man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder-Alkalisalze mit Metallverbindungen von Mg, Ca, Al, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei den Lösungsmitteladditiven um Mineralsäuren, saure Salze, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt.

2. Verfahren nach Anspruch 1, **dadurch gekennzeichnet, dass** es sich bei den sauren Salzen um Natriumbisulfat, Natriumbisulfit und/oder Kaliumbisulfit handelt.

3. Verfahren nach Anspruch 1 oder 2, **dadurch gekennzeichnet, dadurch gekennzeichnet, dass** man die hypophosphorige Säure in situ aus Salzen der hypophosphorigen Säure und mindestens einer Mineralsäure herstellt, wobei das Verhältnis von Additiv-Säure zu Hypophosphit (auf Äquivalentbasis) 0 zu 1 bis 2 zu 1 beträgt.

4. Verfahren nach einem oder mehreren der Ansprüche 1 bis 3, **dadurch gekennzeichnet, dass** die Umsetzung im Schritt a) in Gegenwart eines Radikalinitiators durchgeführt wird, wobei als Radikalinitiatoren Peroxide bildende Verbindungen und/oder Peroxoverbindungen wie Wasserstoffperoxid, Kaliumpersulfat, Natriumpersulfat, Ammoniumpersulfat und/oder Azoverbindungen wie 2,2'-Azobis(2-amidinopropan)-dihydrochlorid und/oder 2,2'-Azobis(N,N'-dimethylenisobutyramidin)-dihydrochlorid eingesetzt werden.

5. Verfahren nach einem oder mehreren der Ansprüche 1 bis 4, **dadurch gekennzeichnet, dass** der Radikalinitator in Mengen von 0,001 bis 10 mol-%, bezogen auf die phosphorhaltige Verbindung, eingesetzt wird.

6. Verfahren nach einem oder mehreren der Ansprüche 1 bis 5, **dadurch gekennzeichnet, dass** als Olefine Ethylen, Propylen, n-Buten und/oder i-Buten oder Gemische davon eingesetzt werden.

7. Verfahren nach einem oder mehreren der Ansprüche 1 bis 6, **dadurch gekennzeichnet, dass** das Verhältnis von Olefine zu Hypophosphit und/oder hypophosphoriger Säure (auf Mol-Basis) 0 zu 1 bis 3 zu 1, bevorzugt 0,5 zu 1 bis 2,5 zu 1 beträgt.

8. Verfahren nach einem oder mehreren der Ansprüche 1 bis 7, **dadurch gekennzeichnet, dass** die Umsetzung der Dialkylphosphinsäuren und/oder -salze mit Metallen und/oder Metallverbindungen nach Verfahrensstufe b) für vierwertige Metallionen oder Metalle mit stabiler vierwertiger Oxidationsstufe in einem Molverhältnis von Dialkylphosphinsäure/-salz zu Metall von 6 zu 1 bis 1 zu 0,66 durchgeführt wird;
für dreiwertige Metallionen oder Metalle mit stabiler dreiwertiger Oxidationsstufe in einem Molverhältnis von Dialkylphosphinsäure/-salz zu Metall von 4,5 zu 1 bis 1 zu 0,66 durchgeführt wird;
für zweiwertige Metallionen oder Metalle mit stabiler zweiwertiger Oxidationsstufe in einem Molverhältnis von Dialkylphosphinsäure/-salz zu Metall von 3 zu 1 bis 1 zu 0,66 durchgeführt wird und
für einwertige Metallionen oder Metalle mit stabiler einwertiger Oxidationsstufe in einem Molverhältnis von Dialkylphosphinsäure/-salz zu Metall von 1,5 zu 1 bis 1 zu 0,66 durchgeführt wird.

9. Verfahren nach einem oder mehreren der Ansprüche 1 bis 8, **dadurch gekennzeichnet, dass** es sich bei den Metallverbindungen von Mg, Ca, Al, Zn, Ti, Sn, Zr oder Fe für Verfahrenstufe b) um Metallsulfate, -sulfat hydrate, -hydroxosulfathydrate, gemischte -hydroxosulfathydrate, oxysulfate, -acetate, -nitrate, -fluorid, -fluoridhydrate, -chlorid, chloridhydrate, -oxychloride, -bromide, -iodide, -iodid und/oder hydrate handelt.

10. Verfahren nach einem oder mehreren der Ansprüche 1 bis 9, **dadurch gekennzeichnet, dass** es sich bei den Metallverbindungen um Aluminiumchlorid, Aluminiumhydroxid, Aluminiumnitrat, Aluminiumsulfat, Titanylsulfat und/oder Zinksulfat handelt.

11. Verfahren nach einem oder mehreren der Ansprüche 1 bis 10, **dadurch gekennzeichnet, dass** die Umsetzung in Verfahrensstufe b) von Dialkylphosphinsäuren und/oder deren Alkalisalzen mit Metallverbindungen von Mg, Ca, Al, Zn, Ti, Sn, Zr oder Fe zu den Dialkylphosphinsäuresalzen dieser Metalle bei einem Feststoffgehalt der Dialkylphosphinsäuresalze dieser Metalle von 0,1 bis 70 Gew.-%, bevorzugt 5 bis 40 Gew.-% erfolgt.

12. Verfahren nach einem oder mehreren der Ansprüche 1 bis 10, **dadurch gekennzeichnet, dass** man in Verfahrenstufe a) erhaltenes Dialkylphosphinsäure-Alkalisalz in einer Verfahrensstufe a1) in die Dialkylphosphinsäure überführt und in Verfahrensstufe b) diese mit Metallverbindungen von Mg, Ca, Al, Zn, Ti, Sn, Zr oder Fe zu den Dialkylphosphinsäuresalzen dieser Metalle umsetzt.

13. Verfahren nach einem oder mehreren der Ansprüche 1 bis 10, **dadurch gekennzeichnet, dass** man in Verfahrenstufe a) erhaltene Dialkylphosphinsäure in einer Verfahrensstufe a1) in ein Dialkylphosphinsäure-Alkalisalz umwandelt und in Verfahrensstufe b) dieses mit Metallverbindungen von Mg, Ca, Al, Zn, Ti, Sn, Zr oder Fe zu den Dialkylphosphinsäuresalzen dieser Metalle umsetzt.

## Claims

1. A process for preparation of dialkylphosphinic salts, which comprises
a) reacting hypophosphorous acid and/or its salts with olefins in the presence of a free-radical initiator to give dialkylphosphinic acids and/or their alkali metal salts, in a solvent system, and
b) reacting the dialkylphosphinic acids and/or alkali metal dialkylphosphinates obtained in a) with compounds of the metals Mg, Ca, Al, Zn, Ti, Sn, Zr, and/or Fe to give the dialkylphosphinic salts of these metals, where the solvent system comprises from 95 to 100% by weight of water and from 0 to 5% by weight of solvent system additives, and where the solvent additives are mineral acids, acidic salts, alkalis, and/or electrolytes, and the mineral acids are element-hydrogen acids, oxo acids, peroxo acids, and/or peroxo diacids of the elements of the seventh, sixth, fifth, fourth, or third main group.

2. The process as claimed in claim 1, wherein the acidic salts are sodium bisulfate, sodium bisulfite, and/or potassium bisulfite.

3. The process as claimed in claim 1 or 2, wherein the hypophosphorous acid is prepared in situ from salts of hypophosphorous acid and from at least one mineral acid, where the ratio of additive acid to hypophosphite (based on equivalents) is from 0:1 to 2:1.

4. The process as claimed in one or more of claims 1 to 3, wherein the reaction in step a) takes place in the presence of a free-radical initiator, where the free-radical initiators used comprise peroxide-forming compounds and/or peroxo compounds, such as hydrogen peroxide, potassium persulfate, sodium persulfate, ammonium persulfate, and/or azo compounds, such as 2,2'-azobis(2-amidinopropane) dihydrochloride and/or 2,2'-azobis(N,N'-dimethyleneisobutyramidine) dihydrochloride.

5. The process as claimed in one or more of claims 1 to 4, wherein the amounts used of the free-radical initiator are from 0.001 to 10 mol%, based on the phosphorus-containing compound.

6. The process as claimed in one or more of claims 1 to 5, wherein the olefins used comprise ethylene, propylene, n-butene, and/or isobutene, or a mixture of these.

7. The process as claimed in one or more of claims 1 to 6, wherein the ratio of olefins to hypophosphite and/or hypophosphorous acid (on a molar basis) is from 0:1 to 3:1, preferably from 0.5:1 to 2.5:1.

8. The process as claimed in one or more of claims 1 to 7, wherein the reaction of the dialkylphosphinic acids and/or dialkylphosphinic salts with metals and/or metal compounds in process stage b) takes place, for tetravalent metal ions or metals with a stable tetravalent oxidation state, having a molar ratio of dialkylphosphinic acid/dialkylphosphinic salt to metal of from 6:1 to 1:0.66;
takes place, for trivalent metal ions or metals with a stable trivalent oxidation state, having a molar ratio of dialkylphosphinic acid/dialkylphosphinic salt to metal of from 4.5:1 to 1:0.66;
takes place, for divalent metal ions or metals with a stable divalent oxidation state, having a molar ratio of dialkylphosphinic acid/dialkylphosphinic salt to metal of from 3:1 to 1:0.66 and
takes place, for monovalent metal ions or metals with a stable monovalent oxidation state, having a molar ratio of dialkylphosphinic acid/dialkylphosphinic salt to metal of from 1.5:1 to 1:0.66.

9. The process as claimed in one or more of claims 1 to 8, wherein the metal compounds of Mg, Ca, Al, Zn, Ti, Sn, Zr, or Fe for process stage b) are metal sulfates, metal sulfate hydrates, metal hydroxosulfate hydrates, mixed metal hydroxosulfate hydrates, oxysulfates, metal acetates, metal nitrates, metal fluoride, metal fluoride hydrates, metal chloride, metal chloride hydrates, metal oxychlorides, metal bromides, metal iodides, metal iodide and/or hydrates.

10. The process as claimed in one or more of claims 1 to 9, wherein the metal compounds are aluminum chloride, aluminum hydroxide, aluminum nitrate, aluminum sulfate, titanyl sulfate, and/or zinc sulfate.

11. The process as claimed in one or more of claims 1 to 10, wherein the solids content of the dialkylphosphinic salts of the metals Mg, Ca, Al, Zn, Ti, Sn, Zr, or Fe during the reaction of dialkylphosphinic acids and/or their alkali metal salts with metal compounds of these metals to give the dialkylphosphinic salts of these metals in process stage b) is from 0.1 to 70% by weight, preferably from 5 to 40% by weight.

12. The process as claimed in one or more of claims 1 to 10, wherein alkali metal dialkylphosphinate obtained in process stage a) is converted in a process stage a1) into the dialkylphosphinic acid, and, in process stage b), this is reacted with metal compounds of Mg, Ca, Al, Zn, Ti, Sn, Zr, or Fe to give the dialkylphosphinic salts of these metals.

13. The process as claimed in one or more of claims 1 to 10, wherein dialkylphosphinic acid obtained in process stage a) is converted in a process stage a1) into an alkali metal dialkylphosphinate, and, in process stage b), this is reacted with metal compounds of Mg, Ca, Al, Zn, Ti, Sn, Zr, or Fe to give the dialkylphosphinic salts of these metals.

## Revendications

1. Procédé pour la préparation de sels d'acides dialkylphosphiniques, **caractérisé en ce que** l'on
a) met à réagir un acide hypophosphoreux et/ou ses sels avec des oléfines en présence d'un amorceur radicalaire pour obtenir des acides dialkylphosphiniques et/ou leurs sels avec des métaux alcalins dans un système de solvants et
b) on met à réagir les acides dialkylphosphiniques et/ou leurs sels avec des métaux alcalins obtenus selon a) avec des composés métalliques de Mg, Ca, Al, Zn, Ti, Sn, Zr et/ou Fe pour obtenir les sels d'acides dialkylphosphiniques de ces métaux, dans lequel le système de solvants contient 95 à 100 % en poids d'eau et 0 à 5 % en poids d'additifs du système de solvants et dans lequel il s'agit, pour les additifs des solvants, d'acides minéraux, de sels acides, d'alcalis et/ou d'électrolytes et il s'agit pour les acides minéraux d'hydracides élémentaires, d'oxoacides, de peroxoacides et/ou de peroxodiacides des éléments du septième, sixième, cinquième, quatrième et troisième groupe principal de la Classification Périodique.

2. Procédé selon la revendication 1, **caractérisé en ce qu'**il s'agit pour les sels acides de bisulfate de sodium, de bisulfite de sodium et/ou de bisulfite de potassium.

3. Procédé selon la revendication 1 ou 2, **caractérisé en ce que** l'on prépare l'acide hypophosphoreux in situ à partir de sels de l'acide hypophosphoreux et au moins d'un acide minéral, dans lequel le rapport de l'acide additif par rapport à l'hypophosphite (sur la base des équivalents) s'élève de 0 à 1 à 2 à 1.

4. Procédé selon une ou plusieurs des revendications 1 à 3, **caractérisé en ce que** l'on effectue la réaction à l'étape a) en présence d'un amorceur radicalaire, dans lequel on utilise comme amorceurs radicalaires des composés formant des peroxydes et/ou des composés peroxo tels que le peroxyde d'hydrogène, le persulfate de potassium, le persulfate de sodium, le persulfate d'ammonium et/ou des composés azoïques tels que le 2,2'-azobis(2-amidinopropane)-dichlorhydrate et/ou le 2,2'-azobis(N,N'-diméthylèneisobutyramidine) - dichlorhydrate.

5. Procédé selon une ou plusieurs des revendications 1 à 4, **caractérisé en ce que** l'on utilise l'amorceur radicalaire en quantités de 0,001 à 10 % en moles, par rapport au composé contenant du phosphore.

6. Procédé selon une ou plusieurs des revendications 1 à 5, **caractérisé en ce que** l'on utilise comme oléfines l'éthylène, le propylène, le n-butène et/ou l'i-butène ou des mélanges d'entre eux.

7. Procédé selon une ou plusieurs des revendications 1 à 6, **caractérisé en ce que** le rapport des oléfines à l'hypophosphite et/ou l'acide hypophosphoreux (sur une base en moles) s'élève de 0 à 1 à 3 à 1, de préférence de 0,5 à 1 à 1 à 2,5 à 1.

8. Procédé selon une ou plusieurs des revendications 1 à 7, **caractérisé en ce que** l'on effectue la réaction des acides et/ou sels d'acides dialkylphosphiniques avec des métaux et/ou des composés métalliques selon l'étape de procédé b) pour des ions métalliques quadrivalents ou des métaux avec un stade d'oxydation quadrivalent stable dans un rapport molaire de l'acide ou du sel d'acide dialkylphosphinique par rapport au métal de 6 à 1 jusqu'à 1 à 0,66 ;
pour les ions métalliques trivalents ou les métaux avec un stade d'oxydation trivalent stable on l'effectue dans un rapport molaire de l'acide ou du sel d'acide dialkylphosphinique par rapport au métal de 4,5 à 1 jusqu'à 1 à 0,66 ;
pour les ions métalliques divalents ou les métaux avec un stade d'oxydation divalent stable on l'effectue dans un rapport molaire de l'acide ou du sel d'acide dialkylphosphinique par rapport au métal de 3 à 1 jusqu'à 1 à 0,66 ;
pour les ions métalliques monovalents ou les métaux avec un stade d'oxydation monovalent stable on l'effectue dans un rapport molaire de l'acide ou du sel d'acide dialkylphosphinique par rapport au métal de 1,5 à 1 jusqu'à 1 à 0,66 ;

9. Procédé selon une ou plusieurs des revendications 1 à 8, **caractérisé en ce qu'**il s'agit pour les composés métalliques de Mg, Ca, Al, Zn, Ti, Sn, Zr ou Fe pour l'étape de procédé b), pour les sulfates métalliques de sulfates hydrates, d'hydroxosulfates hydrates, d'hydroxosulfates hydrates mélangés, d'oxysulfates, d'acétates, de nitrates, de fluorure, de fluorure hydrate, de chlorure, de chlorure hydrate, d'oxychlorure, de bromure, d'iodures, d'iodure et/ou d'hydrate.

10. Procédé selon une ou plusieurs des revendications 1 à 9, **caractérisé en ce qu'**il s'agit pour les composés métalliques de chlorure d'aluminium, hydroxyde d'aluminium, nitrate d'aluminium, sulfate d'aluminium, sulfate de titanyle et/ou sulfate de zinc.

11. Procédé selon une ou plusieurs des revendications 1 à 10, **caractérisé en ce que** l'on effectue la réaction à l'étape de procédé b) des acides dialkylphosphiniques et/ou de leurs sels de métaux alcalins avec des composés métalliques de Mg, Ca, Al, Zn, Ti, Sn, Zr ou Fe pour obtenir les sels d'acides dialkylphosphiniques de ces métaux à une teneur en matière solide des sels d'acides dialkylphosphiniques de ces métaux de 0,1 à 70 % en poids, de préférence de 5 à 40 % en poids.

12. Procédé selon une ou plusieurs des revendications 1 à 10, **caractérisé en ce que** l'on transforme le sel de métal alcalin d'acide dialkylphosphinique obtenu à l'étape de procédé a) dans une étape de procédé a1) en acide dialkylphosphinique et l'on met à réagir celui-ci à l'étape de procédé b) avec les composés métalliques de Mg, Ca, Al, Zn, Ti, Sn, Zr ou Fe pour obtenir les sels d'acides dialkylphosphiniques de ces métaux.

13. Procédé selon une ou plusieurs des revendications 1 à 10, **caractérisé en ce que** l'on transforme l'acide dialkylphosphinique obtenu à l'étape de procédé a) dans une étape de procédé a1) en un sel de métal alcalin d'acide dialkylphosphinique et l'on met à réagir celui-ci à l'étape de procédé b) avec les composés métalliques de Mg, Ca, Al, Zn, Ti, Sn, Zr ou Fe pour obtenir les sels d'acides dialkylphosphiniques de ces métaux.
